# EUROPÄISCHE PATENTSCHRIFT

(11) **EP 0 670 909 B1**
(45) Veröffentlichungstag und Bekanntmachung des Hinweises auf die Patenterteilung: **23.04.1997**
(21) Anmeldenummer: 93923494.4
(22) Anmeldetag: 19.10.1993
(51) Int. Cl.: C14C 9/00

(54) **VERFAHREN ZUR WEICHMACHUNG/FETTUNG VON LEDERN UND PELZEN**
PROCESS FOR SOFTENING/STUFFING LEATHER AND FUR SKINS
PROCEDE PERMETTANT D'ASSOUPLIR ET DE NOURRIR DES CUIRS ET DES FOURRURES

(30) Priorität: 29.10.1992 DE 4236556
(43) Veröffentlichungstag der Anmeldung: 13.09.1995
(73) Patentinhaber: Chemische Fabrik Stockhausen GmbH, D-47805 Krefeld (DE)
(72) Erfinder: DAHMEN, Kurt, D-41239 Mönchengladbach (DE); MERTENS, Richard, D-47803 Krefeld (DE); MÜLLER, Thomas, D-40476 Düsseldorf (DE); LOHMANN, Helmut, D-47802 Krefeld (DE)
(74) Vertreter: Klöpsch, Gerald, Dr.-Ing. Patentanwalt
(86) Internationale Anmeldenummer: EP9302880
(87) Internationale Veröffentlichungsnummer: WO9410346

(56) Entgegenhaltungen:
- EP-A- 0 075 216
- EP-A- 0 412 389

## Beschreibung

Die Erfindung betrifft ein Verfahren zur Weichmachung/Fettung von Ledern und Pelzfellen mit einer wäßrigen Dispersion eines Copolymeren, erhältlich durch:
A) Polymerisation von
   a) 25 bis 70 Gew.% Maleinsäureanhydrid,
   b) 25 bis 70 Gew.% C₁₂ - C₃₀ alpha-Olefinen, Estern der (Meth)Acrylsäure und/oder der Maleinsäure mit C₁₂ - C₃₀ Alkoholen, sowie
   c) 0 bis 10 Gew.% weiteren mit a) und b) copolymerisierbaren, hydrophilen, ethylenisch ungesättigten Monomeren,mit der Maßgabe, daß a) + b) + c) = 100 ist,
B) Umsetzung der Anhydridgruppen vor, während oder nach der Polymerisation mit einwertigen, mindestens eine Etherfunktionalität enthaltenden Alkoholen, wobei das Molverhältnis von Anhydrid zu Alkohol bei 1 : 0,5 bis 1 : 2, vorzugsweise 1 : 0,7 bis 1 : 1,5 liegt, so daß die Menge hydrophiler Einheiten des resultierenden Polymerkörpers größer 50 Gew.% ist, und
C) teilweise Neutralisation bzw. Hydrolyse der verbliebenen Säure bzw. Anhydridgruppen im Polymer und Herstellung einer fließfähigen Dispersion mit einem Gehalt an Aktivsubstanz von mindestens 40 Gew.%, vorzugsweise von mindestens 50 Gew.%.

Zur Herstellung von weichen, geschmeidigen Ledertypen werden in der Lederindustrie häufig Fettungsmittel eingesetzt. Es handelt sich hierbei im Wesentlichen um natürlich vorkommende Fette, Öle und Wachse, welche zum Teil durch geeignete chemische Behandlung, beispielsweise durch Sulfatierung oder Sulfitierung, hydrophiliert werden, so daß sie einerseits in wäßriger Flotte einsetzbar sind und andererseits eine verbesserte Bindung an das Fasergerüst des Leders gegeben ist. Nachteil dieser Fettungsmittel ist, daß sie durch Waschprozesse oder insbesondere bei der üblichen chemischen Reinigung mit Halogenkohlenwasserstoffen aus dem Fasergeflecht herausgelöst werden können und dadurch die Leder verspröden. Ein ähnlicher Effekt kann eintreten, wenn die Fettungsmittel durch Migration insbesondere bei erhöhter Temperatur aufgrund intensiver Sonneneinstrahlung aus dem Leder entfernt werden. Dieser Prozeß führt im speziellen Fall der Sitzbezüge in Fahrzeugen zum sogenannten "Fogging"-Verhalten, da sich die herausgelösten niedermolekularen Bestandteile des Leders als neblige, schmierige Beläge auf Glasscheiben absetzen.

Zur Beseitigung dieser Nachteile wurde daher der Gebrauch von polymeren Substanzen mit weichmachenden Eigenschaften empfohlen.

Die DE 2 629 748 beansprucht die Verwendung von Copolymerisaten aus Monoolefinen mit 10 bis 30 Kohlenstoffatomen und Maleinsäureanhydrid zum Füllen und Fetten von Leder und Pelzfellen. Man erhält bereits ohne die Verwendung weiterer Fettungsmittel weiche, volle Leder. Allerdings ist bei der Herstellung der Copolymerisate die Zugabe großer Mengen schwer abbaubarer organischer Lösungsmittel wie Paraffinöle oder Xylole erforderlich, ein Umstand, der aus heutiger ökologischer Sicht nicht mehr wünschenswert ist.

Die DE 3 926 167 A1 schlägt die Verwendung von Copolymeren aus langkettigen Monoolefinen mit ethylenisch ungesättigten Dicarbonsäureanhydriden zur Hydrophobierung von Leder und Pelzfellen vor. Im Unterschied zu DE 2 629 748 wird nach beendeter Polymerisation eine Solvolyse der Anhydridgruppen des Polymers mittels Alkoholen oder Aminen durchgeführt, wobei maximal 50 mol% der vorhandenen Anhydridgruppen auf diese Weise verestert bzw. amidiert werden sollen. Als für diesen Zweck verwendbare Alkohole werden in der Anmeldung solche mit 1 bis 40, vorzugsweise 3 bis 30 Kohlenstoffatomen genannt. Es findet sich kein Hinweis auf eine Verwendung von Alkoholen mit zusätzlicher Etherfunktion. Für die in Substanz hergestellten Polymerisate werden Feststoffgehalte von 10 bis 60 Gew.%, vorzugsweise 20 bis 55 Gew.% beansprucht, in den angeführten Beispielen werden jedoch lediglich maximal 30 Gew% Feststoffgehalt erreicht.

Für den gleichen Verwendungszweck, nämlich der Hydrophobierung von Ledern und Pelzfellen, schlägt die DE 39 31 039 A1 den Einsatz von Copolymerisaten vor, welche a) 50 bis 90 Gew.% C₈ bis C₄₀-Alkyl(meth)acrylate oder Vinylester von C₈ bis C₄₀-Carbonsäuren und b) 10 bis 50 Gew.% monoethylenisch ungesättigte C₃ bis C₁₂-Carbonsäuren, monoethylenisch ungesättigte Dicarbonsäureanhydride, Halbester oder Halbamiden von monoethylenisch ungesättigten C₄ bis C₁₂-Dicarbonsäuren, Amide von C₃ bis C₁₂-Monocarbonsäuren oder Mischungen hieraus einpolymerisiert enthalten. Im Fall der Verwendung von Maleinsäureanhydrid als Monomer der Gruppe b) wird diese nach beendeter Polymerisation zumindest teilweise neutralisiert oder aber im obigen Sinne solvolysiert.

Die Darstellung der Polymerisate erfolgt entweder in Masse bei Temperaturen oberhalb 200 °C oder als Fällungs- bzw. Lösungspolymerisation unter Zusatz organischer Lösungsmittel, welche nach beendeter Polymerisation durch Destillation entfernt werden müssen. In beiden Fällen müssen große Energiemengen für die Herstellung aufgewendet werden, was aus ökonomischen und ökologischen Gründen von Nachteil ist.

Die EP 372 746 A2 schließlich beschreibt die Behandlung von Ledern mit amphiphilen Copolymeren, bestehend aus einem überwiegendem Anteil hydrophober Monomerer und einem geringerem Anteil hydrophiler Monomerer, zur simultanen Nachgerbung und Fettung von Ledern. Hier werden die erforderlichen Copolymerisate vorzugsweise in Lösung in einem mit Wasser mischbaren Alkohol hergestellt, wobei die Menge an Lösungsmittel 33 bis 400 Gew.%, bezogen auf den Copolymerisatfeststoff beträgt. Da der Alkohol in den Ausführungsbeispielen nach beendeter Polymerisation nicht entfernt wird, belastet er das Abwasser, welches bei der Behandlung in der Gerberei entsteht.

Es bestand somit die Aufgabe, geeignete Systeme zur Ausrüstung von Ledern und Pelzfellen zu finden, welche ohne weitere Fettungszusätze eine gute Lederqualität erzeugen und dabei keine der oben beschriebenen Nachteile aufweisen.

Diese Aufgabe konnte überraschenderweise gelöst werden durch die Behandlung von chromgegerbten Ledern und Pelzfellen mit einer wäßrigen Dispersion wenigstens eines Copolymeren, erhältlich durch:
A) Polymerisation von
   a) 25 bis 70 Gew.% Maleinsäureanhydrid,
   b) 25 bis 70 Gew.% C₁₂ - C₃₀ alpha-Olefinen bzw. Ester der (Meth)Acrylsäure und/oder der Maleinsäure mit C₁₂ - C₃₀ Alkoholen, sowie
   c) 0 bis 10 Gew.% weiteren mit a) und b) copolymerisierbaren, hydrophilen, ethylenisch ungesättigten Monomeren, mit der Maßgabe, daß a) + b) + c) = 100 ist,
B) Umsetzung der Anhydridgruppen vor, während oder nach der Polymerisation mit einwertigen, mindestens eine Etherfunktionalität enthaltenden Alkoholen, wobei das Molverhältnis von Anhydrid zu Alkohol bei 1 : 0,5 bis 1 : 2, vorzugsweise 1 : 0,7 bis 1 : 1,5 liegt, so daß die Menge hydrophiler Einheiten des resultierenden Polymerkörpers größer 50 Gew.% ist, und
C) teilweise Neutralisation bzw. Hydrolyse der verbliebenen Säure bzw. Anhydridgruppen im Polymer und Herstellung einer fließfähigen Dispersion mit einem Gehalt an Aktivsubstanz von mindestens 40 Gew.%, vorzugsweise von mindestens 50 Gew.%.

Mit den erfindungsgemäßen Polymerdispersionen werden überraschenderweise sehr gute Lederqualitäten im Hinblick auf Weichheit, Fülle, Narbenbild und Lederfarbe erhalten.

Die verwendeten Polymere sind im Prinzip bekannt. Die DE 31 36 931 C2 beschreibt Copolymerisate dieses Typs zur Verwendung als Gleitmittel bei der PVC-Herstellung. Es findet sich jedoch kein Hinweis auf einen Gebrauch dieser Mittel in der Lederherstellung.

Die Herstellung der erfindungsgemäßen Polymerdispersionen erfolgt vorzugsweise durch radikalische Polymerisation der Monomere aus den Gruppen a), b) und c) in Substanz bei Temperaturen von 20 bis 200 °C, sie kann aber auch in Emulsion oder in Lösung durchgeführt werden.

Der Start der Reaktion kann durch Redox-Katalyse, thermische oder photochemische Initiierung mit Hilfe von bekannten Initiatorsystemen erfolgen, wobei insbesondere in der Monomermischung lösliche Peroxo- und/oder Azoverbindungen geeignet sind.

Die Monomeren der Gruppe b) werden aus den Substanzklassen der langkettigen alpha-Olefine mit 12 bis 30 Kohlenstoffatomen, der (Meth)acrylsäureester von Alkoholen mit 12 bis 30 Kohlenstoffatomen und/oder der Maleinsäurehalbester von Alkoholen mit 12 bis 30 Kohlenstoffatomen ausgewählt.

Als Beispiele der erstgenannten Stoffklasse seien genannt: Dodecen-1, Tridecen-1, Tetradecen-1, Pentadecen-1, Hexadecen-1, Heptadecen-1, Octadecen-1, Nonadecen-1, Eicosen-1, Duoeicosen-1, Tetraeicosen-1, Hexaeicosen-1 oder technische Gemische dieser Monomere. Bvorzugt von dieser Gruppe eingesetzt werden Hexadecen-1 und Octadecen-1. Die aufgeführten Monomere sind Handelsprodukte.

Als Vertreter der zweiten Klasse seien genannt:
Dodecyl(meth)acrylat, Tetradecyl(meth)acrylat, Hexadecyl(meth)acrylat, Octadecyl(meth)acrylat, Eicosyl(meth)acrylat, Duoeicosyl(meth)acrylat, Tetraeicosyl(meth)acrylat, Hexaeicosyl(meth)acrylat oder Gemische dieser Stoffe. Diese Monomere sind leicht zugänglich durch Reaktion der entsprechenden Alkohole mit (Meth)acrylsäure oder reaktiven Derivaten hiervon wie zum Beispiel den Säurehalogeniden, den Säureanhydriden oder den niedermolekularen Säureestern. Vorzugsweise werden zur Synthese kommerziell erhältliche natürliche Fettalkohole oder Fettalkoholgemische, beispielsweise Stearylalkohol, Kokosfettalkohol oder Talgfettalkohol bzw. technische Alkoholgemische, beispielsweise hergestellt durch die "Aufbau"-Reaktion (Handelsname Alfole) eingesetzt. Die Methoden zur Herstellung dieser Monomerklasse sind dem Fachmann bekannt.

Die drittgenannte Klasse schließlich ist erhältlich durch Reaktion der oben erwähnten Alkohole oder Alkoholgemische mit Maleinsäure oder reaktiven Derivaten hiervon, vorzugsweise wird hierbei das Maleinsäureanhydrid verwendet.

Die Herstellung der estergruppenhaltigen Monomere erfolgt vorzugsweise vor der eigentlichen Polymerisation, es ist aber auch möglich, diese während der Polymerisation zu erzeugen. Ebenso ist es möglich, die langkettigen Alkohole nach beendeter Polymerisation über einpolymerisierte reaktive Säurederivate an den Polymerkörper zu binden.

Als Monomere der Gruppe c) sind alle wasserlöslichen, mit a) und b) copolymerisierbaren Monomere einsetzbar, wie beispielsweise ethylenisch ungesättigte Säuren, deren Salze, Amide, Nitrile und/oder Ester. Als Vertreter dieser Klasse seien genannt: (Meth)acrylsäure, (Meth)allylsulfonsäure, 2-Acrylamido-2-methylpropansulfonsäure, Vinylsulfonsäure, Styrylsulfonsäure, (Meth)acrylamid, Dimethylaminopropyl (meth)-acrylamid, (Meth)acrylnitril, (Meth)acrylsäuremethylester, Hydroxyethyl(meth)acrylat, Vinylacetat und N-Vinylpyrrolidon. Bevorzugt eingesetzt von dieser Gruppe wird die Acrylsäure.

Das Zahlenmittel der Molmasse der erhaltenen Polymerisate liegt zwischen 500 und 50.000 g/mol. Die Molmasse läßt sich zum Beispiel mit Hilfe der Gelpermeationschromatographie ermitteln, wobei Tetrahydrofuran als Laufmittel verwendet wird und engverteilte Polyethylenglykol-Standards zur Eichung eingesetzt werden.

Die Steuerung der Molmasse kann erfolgen über die Menge an Initiator, die Monomerkonzentration, die Wahl der Polymerisationstemperatur oder durch den Einsatz von an sich bekannten Reglern, wie zum Beispiel Mercaptanen.

Die erfindungsgemäße Umsetzung der Anhydridgruppen mit einwertigen Alkoholen mit mindestens einer Etherfunktionalität erfolgt vorzugsweise während oder nach der eigentlichen Polymerisation, sie kann jedoch auch vor der Polymerisation erfolgen. Auf diese Weise lassen sich das Copolymerisationsverhalten und damit die Produkteigenschaften gezielt steuern.

Geeignete Alkohole im Sinne der Erfindung sind wasserlösliche, monofunktionelle Verbindungen der allgemeinen Formel I:

R₁-O-[CHR₂-CHR₃-O]ₙ-H I

mit R₁ = C₁ bis C₆-Alkyl, R₂,R₃ = H, CH₃, n = 1 - 10, vorzugsweise 1 - 4.

Beispiele für geeignete Alkohole sind: Ethylenglykolmonomethylether, Ethylenglykolmonoethylether, Ethylenglykolmonopropylether, Ethylenglykolmonobutylether, Ethylenglykolmonohexylether, Diethylenglykolmonomethylether, Diethylenglykolmonoethylether, Diethylenglykolmonopropylether, Diethylenglykolmonobutylether, Diethylenglykolmonohexylether, Triethylenglykolmonomethylether, Triethylenglykolmonoethylether, Triethylenglykolmonobutylether, Tetraethylenglykolmonoethylether, Tetraethylenglykolmonobutylether.

Bevorzugt eingesetzt von dieser Gruppe werden Ethylenglykolmonobutylether (Butylglykol) und Diethylenglykolmonobutylether (Butyldiglykol).

Nach beendeter Reaktion werden die Polymerisate durch Zugabe von Basen und gegebenenfalls Wasser teilneutralisiert und in den Zustand einer wäßrigen Lösung bzw. Dispersion gebracht. Die Basenmenge wird so gewählt, daß sich der pH-Wert der erhaltenen Lösung bzw. Dispersion zwischen 5 und 9 einstellt.

Als Neutralisationsmittel geeignet sind Alkalimetallhydroxide, Erdalkalimetallhydroxide, Ammoniak, Amine, Polyamine oder Aminoalkohole.

Die erfindungsgemäßen bei Raumtemperatur fließfähigen wäßrigen Lösungen bzw. Dispersionen weisen einen Gehalt an aktiver Substanz von mindestens 40 Gew.%, vorzugsweise mindestens 50 Gew.% auf.

Die Behandlung der gegerbten Häute mit den erfindungsgemäßen Copolymerisaten erfolgt in wäßriger Flotte, erhältlich durch Verdünnen bzw. Dispergieren der beschriebenen Produkte mit Wasser. Die Einsatzmenge des Copolymerisatfeststoffes kann hierbei 1 bis 30 Gew.%, bezogen auf das Falzgewicht des Leders, betragen. Bevorzugt werden Mengen von 3 bis 25 Gew.% verwendet, wobei für die meisten Zwecke 5 bis 10 Gew.% zur Erzielung guter Ledereigenschaften ausreichend sind. Die Flottenlänge beträgt 50 bis 1000 Gew.%, bevorzugt 80 bis 500 Gew.%. Die Behandlung erfolgt bei einem pH-Wert der Flotte von 3,5 bis 7 und bei einer Temperatur von 20 bis 60 Grad Celsius über einen Zeitraum von 5 bis 180 Minuten, vorzugsweise 20 bis 60 Minuten. Sie kann beispielsweise durch Walken in einem Faß erfolgen. Die Behandlung kann mit den erfindungsgemäßen Produkten allein oder zusammen mit bekannten Fettungs und/oder Färbemitteln erfolgen.

Anhand folgender Ausführungsbeispiele sei die Erfindung näher erläutert.

### Herstellung der Copolymerisate

### Beispiel 1:

In einer Apparatur, bestehend aus Planschliffkolben mit mechanischem Rührer, Rückflußkühler, Dosiereinheiten und Innenthermometer werden 180,0 g Octadecen-1 und 120,0 g Butylglykol vorgelegt und auf 130 °C Innentemperatur aufgeheizt. Bei dieser Temperatur wird innerhalb von 2 Stunden eine Mischung von 30,0 g Acrylsäure, 12,4 g Ditertbutylperoxid und 10,0 g Dodecylmercaptan zudosiert. Gleichzeitig werden 90,0 g Maleinsäureanhydrid der Reaktionsmischung in 8 gleichen Portionen zugesetzt. Nach beendeter Zugabe wird eine Stunde bei 130 °C weitergerührt und schließlich bei 90 °C mit 70,8 g 45 %iger Natronlauge und 404,4 g deionisiertes Wasser neutralisiert und dispergiert. Man erhält eine bei 20 °C fließfähige viskose Dispersion mit 50 % Aktivsubstanz (As) und einem Neutralisationsgrad (NG) von 61 %.
pH-Wert (1:10) : 7,8
Viskosität (30 °C, Brookfield RVM, Sp.6, 5 Upm) : 87.000 mPas
Zahlenmittel der Molmasse (GPC) : 1.700 g/mol

### Beispiel 2:

In der in Beispiel 1 beschriebenen Apparatur werden 60,0 g Octadecen-1, 80,0 g eines Reaktionsprodukts von 49,0 g Maleinsäureanhydrid mit 129,0 g Alfol 1618 und 60,0 g Butylglykol vorgelegt und auf 130 °C aufgeheizt. Nach Erreichen der Reaktionstemperatur werden aus verschiedenen Zuläufen gleichzeitig eine Mischung von 20,0 g Acrylsäure mit 8,2 g Di-tertbutylperoxid, eine Lösung von 6,0 g Dodecylmercaptan in 20,0 g Butylglykol und 60,0 g Maleinsäureanhydrid, welche auf 75 °C temperiert ist, innerhalb von 2 Stunden zudosiert. Nach beendeter Zugabe wird eine Stunde bei 130 °C weitergerührt und schließlich bei 90 °C mit 53,0 g 45 %iger Natronlauge und 290,5 g deionisiertem Wasser neutralisiert und dispergiert. Man erhält eine bei 20 °C fließfähige viskose Dispersion mit 50 % Aktivsubstanz (As) und einem Neutralisationsgrad (NG) von 60 %.
pH-Wert (1:10) : 7,2
Zahlenmittel der Molmasse (GPC): 1.650 g/mol

### Beispiel 3:

In der in Beispiel 1 beschriebenen Apparatur werden 240,0 g Octadecen-1, 80,0 g Maleinsäureanhydrid und 120,0 g Butylglykol vorgelegt und 1 Stunde bei 60 °C gerührt. Anschließend wird die Reaktionsmischung auf 130 °C aufgeheizt und eine Mischung aus 40 g Butylglykol, 16 g Di-tertbutylperoxid und 10 g Dodecylmercaptan innerhalb von 2 Stunden zugetropft. Nach einer Stunde Dosierzeit wird aus einem separaten Zulauf 80,0 g auf 75 °C temperiertes Maleinsäureanhydrid innerhalb von 50 Minuten zudosiert. Anschließend wird wie in Beispiel 1 weiterverfahren. Man erhält eine hochviskose Dispersion mit 50 % As und 64 % NG.
pH-Wert (1:10) : 7,8
Viskosität (30 °C, Brookfield RVM, Sp.7, 5 Upm) : 376.000 mPas
Zahlenmittel der Molmasse (GPC): 1.700 g/mol

### Beispiel 4:

Man verfährt wie in Beispiel 3, jedoch werden lediglich 60,0 g flüssiges Maleinsäureanhydrid zudosiert.
Produktdaten (50 % As, 64 % NG):
pH-Wert (1:10) : 7,8
Viskosität (30 °C, Brookfield RVM, Sp.7, 5 Upm) : 133.000 mPas
Zahlenmittel der Molmasse (GPC): 1.900 g/mol

### Beispiel 5:

In der in Beispiel 1 beschriebenen Apparatur werden 70,0 g Octadecen-1, 70,0 g eines Reaktionsprodukts von 35,3 g Maleinsäureanhydrid mit 87,3 g Talgfettalkohol und 60,0 g Butylglykol vorgelegt und auf 130 °C Innentemperatur aufgeheizt. Bei dieser Temperatur werden aus verschiedenen Zuläufen gleichzeitig 20,0 g Acrylsäure, 8,2 g Di-tert-butylperoxid, 6,0 g Dodecylmercaptan, 20,0 g Butylglykol und 60,0 g flüssiges Maleinsäureandydrid innerhalb von zwei Stunden zudosiert. Man rührt eine weitere Stunde bei 130 bis 150 °C, läßt auf 90 °C abkühlen und neutralisiert mit 54,0 g Natronlauge (50 %) und 288,9 g deinoisiertem Wasser. Man erhält eine feinteilige Dispersion mit 50 % As und 64 % NG.
pH-Wert (1:10) : 7,3
Zahlenmittel der Molmase (GPC) : 1.300 g/mol

### Beispiel 6:

In der in Beispiel 1 beschriebenen Apparatur werden 120,0 g Octadecen-1 und 60,0 g Triethylenglykolmonoethylether vorgelegt und auf 130 °C Innentemperatur aufgeheizt. Bei dieser Temperatur werden gleichzeitig 20,0 g Acrylsäure, 8,0 g Di-tert-butylperoxid, 6,6 g Mercaptoethanol, 15,0 g Triethylenglykolmonoethylether und 60,0 g flüssiges Maleinsäureanhydrid innerhalb von zwei Stunden zudosiert. Man rührt eine weitere Stunde bei 130 bis 150 °C, läßt auf 90 °C abkühlen und neutralisiert mit 44,6 g Natronlauge (50 %) und 427,9 g deionisiertem Wasser. Man erhält eine feinteilige Dispersion mit 40 % As und 55 % NG.
pH-Wert (1:10) : 7,4
Zahlenmittel der Molmasse (GPC): 1.500 g/mol

### Beispiel 7:

In der in Beispiel 1 beschriebenen Apparatur werden 240,0 g Octadecen-1 und 150,0 g eines Reaktionsprodukts von 1 Mol Propylenglykolmonobutylether mit 9 mol Ehtylenoxid vorgelegt und auf 130 °C Innentemperatur aufgeheizt. Bei dieser Temperatur werden aus verschiedenen Zuläufen gleichzeitig 40,0 g Acrylsäure, 16,0 g Di-tert-butylperoxid, 13,2 g Mercaptoethanol, 10,0 g Butylglykol und 120,0 g flüssiges Maleinsäureanhydrid innerhalb von zwei Stunden zudosiert. Man rührt eine weitere Stunde bei 130 bis 150 °C, läßt auf 90 °C abkühlen und neutralisiert mit 71,2 g Natronlauge (50 %) und 557,2 g deionisiertem Wasser. Man erhält eine feinteilige Dispersion mit 50 % As und 50 % NG.
pH-Wert (1:10) : 6,7
Viskosität (30 °C, Brookfield RVM, Sp. 6, 10 Upm) : 3.200 mPas
Zahlenmittel der Molmasse (GPC) : 1.600 g/mol

### Beispiele 8 - 14: Ledertechnische Anwendung

Die Behandlung der Leder mit den erfindungsgemäßen Copolymeren erfolgte nach folgendem Verfahrensschema:
Leder: Rindleder, Typ Nappa, wet blue, Falzstärke 1,0 bis 1,2 mm, Prozent-Angaben beziehen sich auf das Falzgewicht.

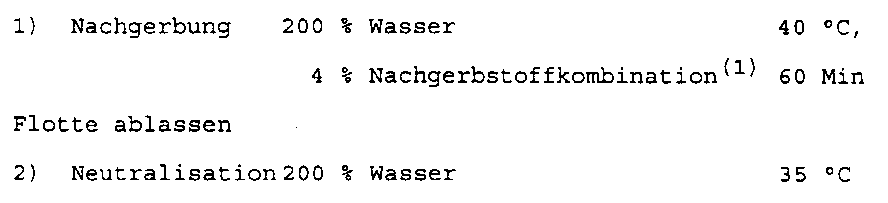

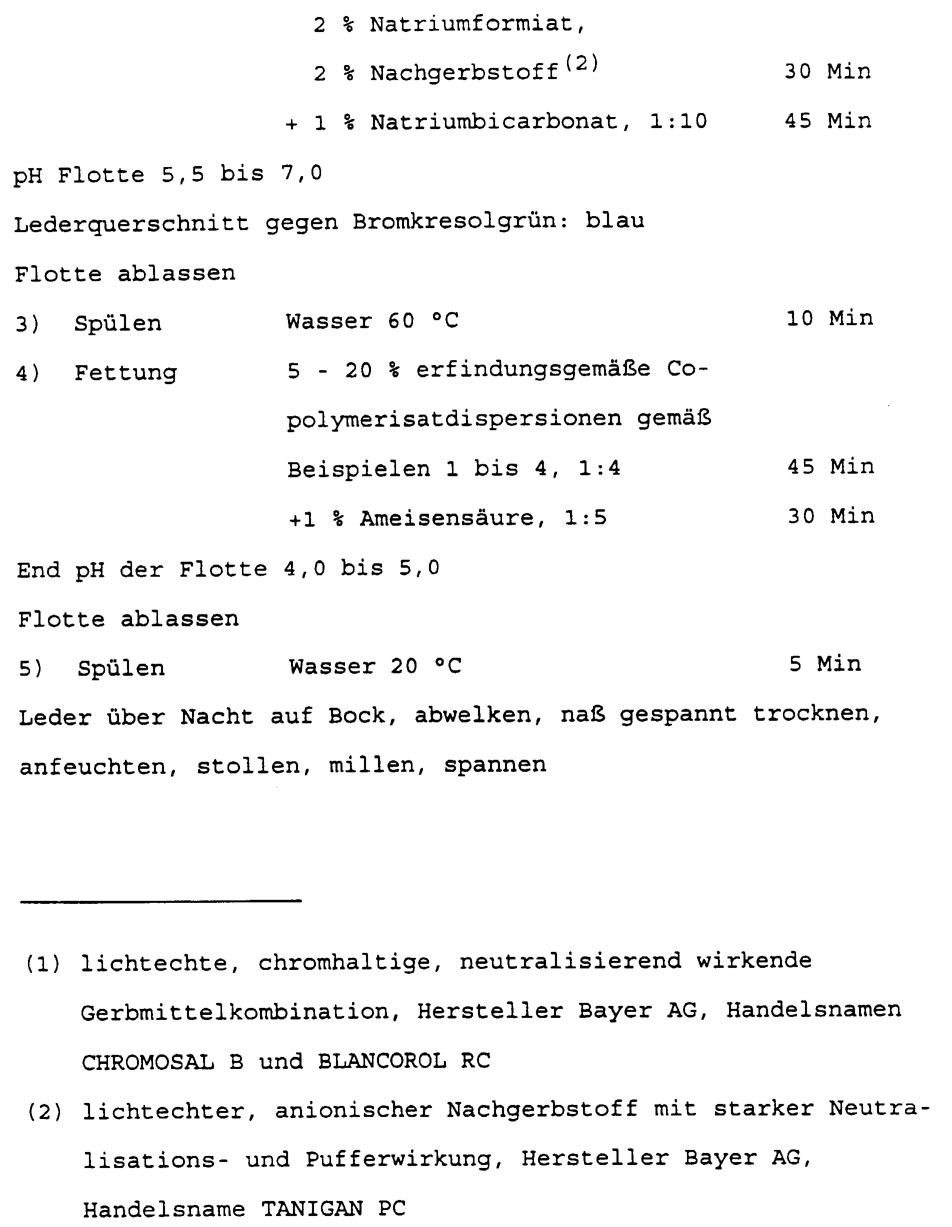

Die Prüfung der erhaltenen Leder erfolgte durch Benotung von Weichheit, Narbenfestigkeit und Lederfarbe. Mit den in den Beispielen 1 bis 4 aufgeführten Polymerdispersionen erhält man in allen Fällen weiche, narbenfeste Leder mit angenehmen Griff und guter Fülle. Die Lederfarbe bleibt unverändert.

## Patentansprüche

1. Verfahren zur Fettung/Weichmachung von Ledern und Pelzfellen, **dadurch gekennzeichnet,** daß man die Leder bzw. Pelzfelle mit einer wäßrigen Dispersion wenigstens eines Copolymeren behandelt, erhältlich durch:
A) Polymerisation von
a) 25 bis 70 Gew.% Maleinsäureanhydrid,
b) 25 bis 70 Gew.% C₁₂ - C₃₀ alpha-Olefinen, Estern der (Meth)Acrylsäure und/oder der Maleinsäure mit C₁₂ - C₃₀ Alkoholen, sowie
c) 0 bis 10 Gew.% weiteren mit a) und b) copolymerisierbaren, hydrophilen, ethylenisch ungesättigten Monomeren,
mit der Maßgabe, daß a) + b) + c) = 100 ist,
B) Umsetzung der Anhydridgruppen vor, während oder nach der Polymerisation mit einwertigen, mindestens eine Etherfunktionalität enthaltenden Alkoholen, wobei das Molverhältnis von Anhydrid zu Alkohol bei 1 : 0,5 bis 1 : 2, vorzugsweise 1 : 0,7 bis 1 : 1,5 liegt, so daß die Menge hydrophiler Einheiten des resultierenden Polymerkörpers größer 50 Gew.% ist, und
C) teilweise Neutralisation bzw. Hydrolyse der verbliebenen Säure bzw. Anhydridgruppen im Polymer und Herstellung einer fließfähigen Dispersion mit einem Gehalt an Aktivsubstanz von mindestens 40 Gew.%, vorzugsweise mindestens 50 Gew.%.

2. Verfahren nach Anspruch 1, **dadurch gekennzeichnet,** daß man Copolymere verwendet, die durch Polymerisation in Substanz erhältlich sind.

3. Verfahren nach den Ansprüchen 1 und 2, **dadurch gekennzeichnet,** daß man Copolymere verwendet, die durch die Umsetzung der Anhydridgruppen mit Alkoholen der allgemeinen Formel I
R₁-O-[CHR₂-CHR₃-O]ₙ-H I
mit R₁ = C₁ bis C₆-Alkyl; R₂,R₃ = H, CH₃; n = 1 - 10, vorzugsweise 1 - 4 erhältlich sind.

4. Verfahren nach den Ansprüchen 1 bis 3, **dadurch gekennzeichnet,** daß man 1 bis 30 Gew.% des Copolymerisatfeststoffes, vorzugsweise 3 bis 25 Gew.%, besonders bevorzugt 5 bis 10 Gew. %, bezogen auf das Falzgewicht des Leders bzw. Pelzfelles, zur Behandlung einsetzt.

5. Verfahren nach den Ansprüchen 1 bis 4, **dadurch gekennzeichnet,** daß die Behandlung der gegerbten Leder oder Pelzfelle bei einer Flottenlänge von 50 bis 1000 Gew.%, bevorzugt 80 bis 500 Gew.%, einem pH-Wert der Flotte von 3,5 bis 7 und bei einer Temperatur von 20 bis 60 Grad Celsius über einen Zeitraum von 5 bis 180 Minuten, vorzugsweise 20 bis 60 Minuten erfolgt.

6. Verfahren nach den Ansprüchen 1 bis 5, **dadurch gekennzeichnet,** daß man die erfindungsgemäßen Polymerdispersionen in Kombination mit üblichen Lederfettungsmitteln auf der Basis von sulfatierten oder sulfitierten Ölen oder Fetten eingesetzt werden.

7. Mittel zur Lederbehandlung, welche Copolymerisate gemäß den Ansprüchen 1 bis 4 enthalten.

## Claims

1. A process for fat liquoring and greasing/softening leathers and fur skins characterized in that the leathers and furs are treated with an aqueous dispersion of at least one copolymer obtainable by
A) polymerizing
a) 25 to 70%-wt. maleic anhydride,
b) 25 to 70%-wt. C₁₂-C₃₀ alpha-olefins, esters of (meth)acrylic acid and/or maleic acid with C₁₂-C₃₀ alcohols,
and
c) 0 to 10%-wt. further hydrophilic, ethylenically unsaturated monomers which are copolymerizable with a) and b),
with the proviso that a) + b) + c) = 100,
B) reacting the anhydride groups prior to, during, or after polymerization with monovalent alcohols comprising at least one ether functionality, the molar ratio of anhydride to alcohol being of the order of 1 : 0.5 to 1 : 2, preferably 1 : 0.7 to 1 : 1.5, so that the amount of hydrophilic units of the resultant polymer is larger than 50%-wt., and
C) partially neutralizing or hydrolyzing the residual acid or anhydride groups in the polymer and manufacturing a flowable dispersion having an active substance content of at least 40%-wt., preferably at least 50%-wt.

2. The process according to claim 1 characterized in that copolymers are used which are obtainable by bulk polymerization.

3. The process according to claims 1 and 2 characterized in that copolymers are used which are obtainable by reacting the anhydride groups with alcohols of the general formula I
R₁-O-[CHR₂-CHR₃-O]ₙ-H I
with R₁ = C₁ to C₆ alkyl; R₂, R₃ = H, CH₃; n = 1 - 10, preferably 1 - 4.

4. The process according to claims 1 to 3 characterized in that 1 to 30%-wt. of the copolymer solid, preferably 3 to 25%-wt., and most preferably 5 to 10%-wt., relative to the shaved weight of the leather or fur skin, are used for the treatment.

5. The process according to claims 1 to 4 characterized in that the treatment of the tanned leathers or fur skins is carried out at a float ratio of 50 to 1,000%-wt., preferably 80 to 500%-wt., at a pH-value of the float of 3.5 to 7, and at a temperature of 20 to 60°C over a period of 5 to 180 minutes, preferably 20 to 60 minutes.

6. The process according to claims 1 to 5 characterized in that the polymer dispersions according to the invention are used in combination with conventional leather fat liquors based on sulfated or sulfited oils or fats.

7. Agents for the treatment of leather comprising copolymers according to claims 1 to 4.

## Revendications

1. Procédé de nourriture/assouplissement de cuirs et de peaux à fourrures, caractérisé en ce que l'on traite les cuirs ou les peaux à fourrures par une dispersion aqueuse d'au moins un copolymère, que l'on peut obtenir par :
A) la polymérisation de
a) 25 à 70% en poids d'anhydride maléique,
b) 25 à 70% en poids d'α-oléfines en C₁₂ à C₃₀, d'esters de l'acide (méth)acrylique et/ou de l'acide maléique, avec des alcools en C₁₂ à C₃₀, ainsi que
c) 0 à 10% en poids d'autres monomères éthyléniquement insaturés, hydrophiles, copolymérisables avec a) et b),
avec la condition que a) + b) + c) = 100,
B) la réaction des radicaux anhydride, avant, pendant ou après la polymérisation, avec des alcools monohydroxylés, contenant au moins une fonction éther, où le rapport molaire de l'anhydride à l'alcool varie de 1:0,5 à 1:2, de préférence de 1:0,7 à 1:1,5, de sorte que la proportion d'unités hydrophiles du polymère qui en résulte soit supérieure à 50% en poids et
C) l'hydrolyse ou la neutralisation partielle des radicaux anhydride ou acide résiduels dans le polymère et la préparation d'une dispersion fluide d'une teneur en substance active d'au moins 40% en poids, de préférence, au moins 50% en poids.

2. Procédé suivant la revendication 1, caractérisé en ce que l'on utilise des copolymères que l'on peut obtenir par polymérisation dans la masse.

3. Procédé suivant les revendications 1 et 2, caractérisé en ce que l'on utilise des polymères que l'on peut obtenir par réaction des radicaux anhydride avec des alcools de la formule générale I
R₁-O-[CHR₂-CHR₃-O]ₙ-H I
dans laquelle R₁ représente un radical alkyle en C₁ à C₆, R₂ et R₃ représentent des atomes d'hydrogène ou des radicaux CH₃, n a une valeur qui varie de 1 à 10, de préférence, de 1 à 4.

4. Procédé suivant les revendications 1 à 3, caractérisé en ce que l'on met en oeuvre de 1 à 30% du copolymère solide, de préférence, de 3 à 25% en poids, mieux encore, de 5 à 10% en poids, du copolymère solide, par rapport au poids du cuir ou de la peau à fourrure après dérayage, en vue de procéder au traitement.

5. Procédé suivant les revendications 1 à 4, caractérisé en ce que le traitement des peaux à fourrures ou du cuir ayant subi le tannage s'effectue dans un bain d'une longueur de 50 à 1000% en poids, de préférence, 80 à 500% en poids, un pH du bain de 3,5 à 7 et à une température de 20 à 60° Celsius pendant une période qui varie de 5 à 180 minutes, de préférence 20 à 60 minutes.

6. Procédé suivant les revendications 1 à 5, caractérisé en ce que l'on utilise les dispersions de polymères conformes à la présente invention en combinaison avec des agents de nourriture du cuir habituels à base de graisses ou d'huiles sulfatées ou sulfitées.

7. Agents de traitement du cuir, qui contiennent des copolymères suivant l'une quelconque des revendications 1 à 4.
